# EUROPEAN PATENT APPLICATION

(11) **EP 4 670 854 A1**
(43) Date of publication of application: **31.12.2025**
(21) Application number: 25183809.0
(22) Date of filing: 18.06.2025
(51) Int. Cl.: B05C 5/02, B05C 9/06

(54) **SLOT DIE COATER**

(30) Priority: 27.06.2024 KR 20240084744
(71) Applicant: SAMSUNG SDI CO., LTD., Yongin-si, Gyeonggi-do 17084 (KR)
(72) Inventor: PARK, Hyemin, 17084 Yongin-si (KR); LEE, Junghyun, 17084 Yongin-si (KR); LEE, Giwook, 17084 Yongin-si (KR); PARK, Jeongyi, 17084 Yongin-si (KR); JUNG, Mingyu, 17084 Yongin-si (KR)
(74) Representative: Marks & Clerk LLP

(57) **Abstract**

A slot die coater includes: a top die and a bottom die; and a spacer between the top die and the bottom die. The spacer has a slot and a first discharge port for discharging an active material slurry and an insulating material slurry passage and a second discharge port for discharging an insulating material slurry on both sides of a width direction of the first discharge port. The spacer includes: a first layer part on a bottom die side of the spacer and defining a first width between first inner walls on both sides of the first discharge port, and a second layer part on a top die side of the spacer and defining a second width between second inner walls on both sides of the first discharge port. The second with has a size different from the first width.

## Description

### BACKGROUND

### 1. Field

Aspects of embodiments of the present disclosure relate to a slot die coater coater for coating an active material slurry and an insulating material slurry on a plate substrate.

### 2. Description of the Related Art

A rechargeable (or secondary) battery is a battery that is designed to be repeated charged and discharged, unlike a primary battery. A small rechargeable battery is used to power portable, small electronic devices, such as mobile phones, laptop computers, or camcorders. A large-capacity and high-density rechargeable battery is used to store motor driving power or energy for hybrid vehicles and electric vehicles.

A rechargeable battery generally includes an electrode assembly for charging and discharging a current, a case or pouch for receiving (or accommodating) the electrode assembly and an electrolyte solution, an electrode terminal connected to the electrode assembly and extending out of the case or pouch. The electrode assembly may be a jelly roll type formed by winding the electrode and the separator or a stack type formed by stacking the electrode and the separator.

A manufacturing process of the rechargeable battery includes a process of manufacturing the electrode. The electrode manufacturing process may include a coating process where an active material slurry and an insulating material slurry are coated on a plate (or film) substrate. When performing a stripe coating, the insulating material slurry is coated on both sides of the active material slurry in the coating width direction. Insulating material coating methods include a method of simultaneously coating a positive slurry and the insulating material slurry by using an integral slot die coating and a method of sequentially coating the insulating material slurry after coating the positive slurry.

The integral slot die simultaneously coats the active material slurry and the insulating material slurry. To this end, the integral slot die must not obstruct the flow path of a ceramic slurry, and even if a ceramic slurry is coated on both sides of the active material coating portion in the width direction to form a ceramic insulation layer, edge rising mixing of the ceramic slurry and/or edge breakage should be prevented on both sides of the width direction of the active material coating portion.

### SUMMARY

Embodiments of the present disclosure provide a slot die coater that prevents edge rising, ceramic mixing, or edge breakage due to the coating of the ceramic slurry at both ends of the active material coating portion in the width direction.

A slot die coater, according to an embodiment, includes a top die and a bottom die; and a spacer between the top die and the bottom die. The spacer having a slot and a first discharge port for discharging an active material slurry and an insulating material slurry passage and a second discharge port for discharging an insulating material slurry on both sides of the width direction of the first discharge port. The spacer includes a first layer part on a bottom die side thereof and defining a first width between first inner walls on both sides of the first discharge port and a second layer part on a top die side thereof and defining a second width between second inner walls on both sides of the first discharge port. The second width has a size different from the first width.

The second width may be larger than the first width.

The bottom die may include a first chamber and a first supply port, and the first discharge port may be connected to the first supply port through the first chamber. The spacer may have a second chamber connected to the insulating material slurry passage, and the second discharge port may be connected to a second supply port in the top die through the second chamber and the insulating material slurry passage.

The second inner wall of the second layer part may be connected perpendicularly to the upper surface of the first layer part.

The first layer part may have a tapered structure that gradually expands from an inside of the slot toward the first discharge port, and the second layer part may have a uniform straight-line structure from the inside of the slot toward the first discharge port.

From the inside of the slot toward the first discharge port, the first width may gradually narrow and the second width may be uniform.

The first width of the first layer part may extend again from a minimum width point to the first discharge port, and the second width of the second layer part may extend from the minimum width point to the first discharge port.

The insulating material slurry passage may have a uniform straight-line structure from the second chamber to the second discharge port and may gradually narrow toward the first discharge port by corresponding to the minimum width point to have a minimum width at the second discharge port.

The first layer part may have a uniform straight-line structure from the inside of the slot toward the first discharge port, and the second layer part may have a uniform straight-line structure from the inside of the slot toward the first discharge port.

From the inside of the slot toward the first discharge port, the first width may be uniform and the second width may be uniform.

The second inner wall of the second layer part may be connected to the top of the first inner wall of the first layer part by an inclined plane.

The first layer part may have a tapered structure that gradually expands from the inside of the slot toward the first discharge port, and the second layer part may have a uniform straight-line structure at the top and a tapered structure that gradually expands at the bottom from the inside of the slot toward the first discharge port, and the top and the bottom may be connected by the inclined plane.

The inclined plane forming the second inner wall of the second layer part may have an inclination angle with reference to a thickness direction of the spacer, and the inclination angle may gradually increase from the inside of the slot toward the first discharge port.

The second inner wall of the second layer part may be connected to the upper end of the first inner wall of the first layer part with an upward concave surface.

The first layer part may have a tapered structure that gradually expands from the inside of the slot toward the first discharge port, the second layer part may have a uniform straight-line structure at the top and a tapered structure that gradually expands at a bottom as it moves from the inside of the slot toward the first discharge port, and the top and the bottom may be connected by the upward concave surface.

The second inner wall of the second layer part may be connected to the top of the first inner wall of the first layer part by an upward convex surface.

The first layer part may have a tapered structure that gradually expands from the inside of the slot toward the first discharge port, the second layer part may have a uniform straight-line structure at the top and a tapered structure that gradually expands at the bottom as it goes from the inside of the slot toward the first discharge port, and the top and the bottom may be connected by the upward convex surface.

According to embodiments of the present disclosure, first and second discharge ports in the spacer are formed by the first layer part and the second layer part of the spacer, and a first width between first inner walls of the first layer part and a second width between second inner walls of the second layer part have different sizes from each other, thereby reducing the discharge amount of the active material slurry on both sides of the active material coating portion in the width direction. Therefore, when coating the insulating material slurry on both ends of the active material coating portion, edge rising, mixing of the insulating material, and/or edge breakage at both ends of the coating portion may be mitigated or prevented.

At least some of the above and other features of the invention are set out in the claims.

### BRIEF DESCRIPTION OF THE DRAWINGS

FIG. 1 is an exploded cross-sectional view of a slot die coater according to an embodiment of the present disclosure.
FIG. 2 is a top plan view of a spacer to be applied to the slot die coater shown in FIG. 1.
FIG. 3 is a partial perspective view of an insulating material slurry passage and first and second discharge ports in the spacer shown in FIG. 2.
FIG. 4 is a cross-sectional view taken along the line IV-IV in FIG. 2.
FIG. 5 is a top plan view of a spacer to be applied to a slot die coater according to another embodiment of the present disclosure.
FIG. 6 is a partial perspective view of an insulating material slurry passage and first and second discharge ports in the spacer shown in FIG. 5.
FIG. 7 is a top plan view of a spacer to be applied to a slot die coater according to another embodiment of the present disclosure.
FIG. 8 is a partial perspective view of an insulating material slurry passage and first and second discharge ports in the spacer shown in FIG. 7.
FIG. 9 is a cross-sectional view taken along the line IX-IX in FIG. 7.
FIG. 10 is a top plan view of a spacer to be applied to a slot die coater according to another embodiment of the present disclosure.
FIG. 11 is a partial perspective view of an insulating material slurry passage and first and second discharge ports in the spacer shown in FIG. 10.
FIG. 12 is a cross-sectional view taken along the line XII-XII in FIG. 10.
FIG. 13 is a top plan view of a spacer to be applied to a slot die coater according to another embodiment of the present disclosure.
FIG. 14 is a partial perspective view of an insulating material slurry passage and first and second discharge ports in the spacer shown in FIG. 13.
FIG. 15 is a cross-sectional view taken along the line XV-XV in FIG. 13.
FIG. 16 is a top plan view of a spacer to be applied to a slot die coater according to a comparative example.
FIG. 17 is a partial perspective view of an insulating material slurry passage, and first and second discharge ports in the comparative spacer shown in FIG. 16.

### DETAILED DESCRIPTION

The present disclosure will be described more fully hereinafter with reference to the accompanying drawings, in which embodiments of the present disclosure are shown. As those skilled in the art would realize, the described embodiments may be modified in various different ways, all without departing from the scope of the present disclosure. The drawings and description are to be regarded as illustrative in nature and not restrictive.

It will be understood that when an element or layer is referred to as being "on," "connected to," or "coupled to" another element or layer, it may be directly on, connected, or coupled to the other element or layer or one or more intervening elements or layers may also be present. When an element or layer is referred to as being "directly on," "directly connected to," or "directly coupled to" another element or layer, there are no intervening elements or layers present. For example, when a first element is described as being "coupled" or "connected" to a second element, the first element may be directly coupled or connected to the second element or the first element may be indirectly coupled or connected to the second element via one or more intervening elements.

In the figures, dimensions of the various elements, layers, etc. may be exaggerated for clarity of illustration. The same reference numerals designate the same elements. As used herein, the term "and/or" includes any and all combinations of one or more of the associated listed items. Further, the use of "may" when describing embodiments of the present disclosure relates to "one or more embodiments of the present disclosure." Expressions, such as "at least one of" and "any one of," when preceding a list of elements, modify the entire list of elements and do not modify the individual elements of the list. For example, the expression "at least one of a, b, or c" indicates only a, only b, only c, both a and b, both a and c, both b and c, all of a, b, and c, or variations thereof. As used herein, the terms "use," "using," and "used" may be considered synonymous with the terms "utilize," "utilizing," and "utilized," respectively. As used herein, the terms "substantially," "about," and similar terms are used as terms of approximation and not as terms of degree, and are intended to account for the inherent variations in measured or calculated values that would be recognized by those of ordinary skill in the art.

It will be understood that, although the terms first, second, third, etc. may be used herein to describe various elements, components, regions, layers, and/or sections, these elements, components, regions, layers, and/or sections should not be limited by these terms. These terms are used to distinguish one element, component, region, layer, or section from another element, component, region, layer, or section. Thus, a first element, component, region, layer, or section discussed below could be termed a second element, component, region, layer, or section without departing from the teachings of example embodiments.

Spatially relative terms, such as "beneath," "below," "lower," "above," "upper," and the like, may be used herein for ease of description to describe one element or feature's relationship to another element(s) or feature(s) as illustrated in the figures. It will be understood that the spatially relative terms are intended to encompass different orientations of the device in use or operation in addition to the orientation depicted in the figures. For example, if the device in the figures is turned over, elements described as "below" or "beneath" other elements or features would then be oriented "above" or "over" the other elements or features. Thus, the term "below" may encompass both an orientation of above and below. The device may be otherwise oriented (rotated 90 degrees or at other orientations), and the spatially relative descriptors used herein should be interpreted accordingly.

The terminology used herein is for the purpose of describing embodiments of the present disclosure and is not intended to be limiting of the present disclosure. As used herein, the singular forms "a" and "an" are intended to include the plural forms as well, unless the context clearly indicates otherwise. It will be further understood that the terms "includes," "including," "comprises," and/or "comprising," when used in this specification, specify the presence of stated features, integers, steps, operations, elements, and/or components but do not preclude the presence or addition of one or more other features, integers, steps, operations, elements, components, and/or groups thereof.

A person of ordinary skill in the art would appreciate, in view of the present disclosure in its entirety, that each suitable feature of the various embodiments of the present disclosure may be combined or combined with each other, partially or entirely, and may be technically interlocked and operated in various suitable ways, and each embodiment may be implemented independently of each other or in conjunction with each other in any suitable manner unless otherwise stated or implied.

Also, any numerical range disclosed and/or recited herein is intended to include all sub-ranges of the same numerical precision subsumed within the recited range. For example, a range of "1.0 to 10.0" is intended to include all subranges between (and including) the recited minimum value of 1.0 and the recited maximum value of 10.0, that is, having a minimum value equal to or greater than 1.0 and a maximum value equal to or less than 10.0, such as, for example, 2.4 to 7.6. Any maximum numerical limitation recited herein is intended to include all lower numerical limitations subsumed therein, and any minimum numerical limitation recited in this specification is intended to include all higher numerical limitations subsumed therein. Accordingly, Applicant reserves the right to amend this specification, including the claims, to expressly recite any sub-range subsumed within the ranges expressly recited herein. All such ranges are intended to be inherently described in this specification such that amending to expressly recite any such subranges would comply with the requirements of 35 U.S.C. § 112(a) and 35 U.S.C. § 132(a).

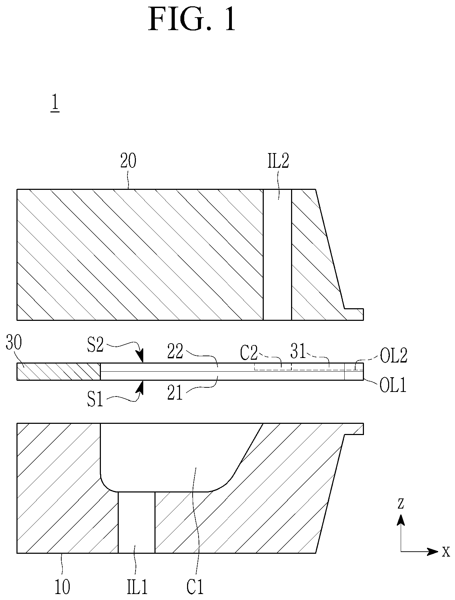

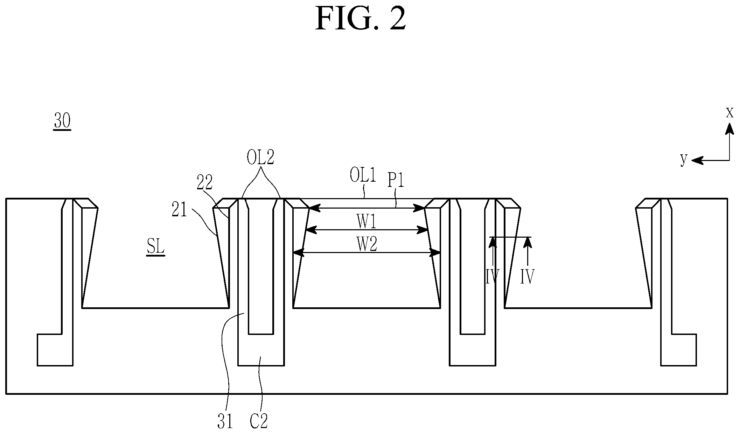

FIG. 1 is an exploded cross-sectional view of a slot die coater according to an embodiment of the present disclosure. FIG. 2 is a top plan view of a spacer to be applied to the slot die coater shown in FIG. 1. Referring to FIG. 1 and FIG. 2, a slot die coater, according to an embodiment of the present disclosure, includes a bottom die 10, a top die 20, and a spacer 30.

The bottom die 10 has a first chamber C1 and a first supply port IL1. An active material slurry supplied from an outside is supplied to the first chamber C1 through the first supply port IL1. The top die 20 has a second supply port IL2 for supplying an insulating material slurry, for example, a ceramic slurry, from the outside.

The spacer 30 is interposed between (e.g., is arranged between) the top die 20 and the bottom die 10 to set (or form) a slot SL and a first discharge port OL1 for discharging the active material slurry and a second discharge port OL2 for discharging the insulating material slurry on both sides of the first discharge port OL1 in the width direction.

The spacer 30 has a second chamber C2 and an insulating material slurry passage 31. The insulating material slurry supplied from the outside is supplied to the second chamber C2 and the second discharge port OL2 through the second supply port IL2.

The spacer 30 has a plurality of first discharge ports OL1 and a second discharge port OL2 between neighboring (or adjacent) ones of the first discharge ports OL1 and on the outermost periphery of the first discharge port OL1 to form a plurality of active material coating portions on the electrode substrate and for coating a ceramic slurry on both sides of each active material coating portion in the width direction to insulate both sides of the active material coating portion in the width direction.

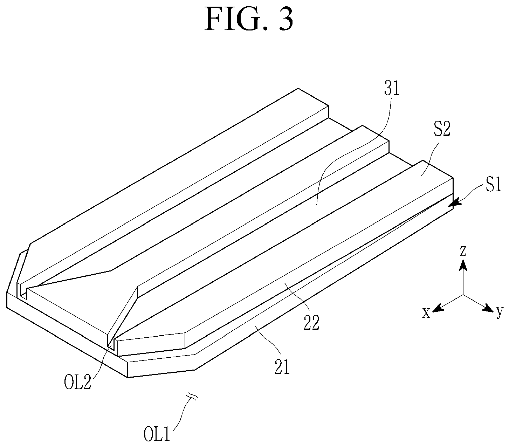

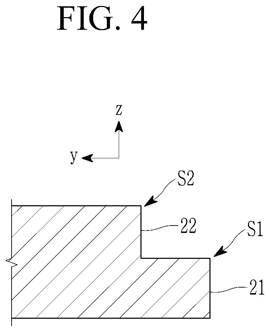

FIG. 3 is a partial perspective view of an insulating material slurry passage and first and second discharge ports in the spacer shown in FIG. 2. FIG. 4 is a cross-sectional view taken along the line IV-IV in FIG. 2. Referring to FIG. 1 to FIG. 4, the spacer 30 is placed (or arranged) between the bottom die 10 and the top die 20 and includes a first layer part S1 on the bottom die 10 side (e.g., facing the bottom die 10) and a second layer part S2 on the top die 20 side (e.g., facing the top die 20).

The first layer part S1 is provided on the bottom die 10 side of the spacer 30, and a first width W1 is defined between first inner walls 21 on both sides of the first discharge port OL1. The second layer part S2 is provided on the top die 20 side of the spacer 30, and a second width W2 is defined between the second inner walls 22 on both sides of the first discharge port OL1. The second width W2 may have a different size than the first width W1.

The second width W2 defined by the second inner walls 22 is larger than the first width W1, which is defined by the first inner walls 21. As the first width W1 becomes narrower, the amount of the active material slurry discharged into the first layer part S1 is less than the amount of active material slurry discharged into the second layer part S2 and is reduced. Therefore, even when coating the insulating material slurry, a phenomenon of rising, mixing, and/or breaking at the edge of the active material coating portion may be mitigated or prevented.

The first discharge port OL1 is formed between the lower surface of the spacer 30 and the upper surface of the bottom die 10 and is connected to (e.g., is in fluid communication with) the first supply port IL1 through the first chamber C1. The second discharge port OL2 is formed between the upper surface of the spacer 30 and the lower surface of the top die 20 and is connected to (e.g., is in fluid communication with) the second chamber C2 through the insulating material slurry passage 31 and to the second supply port IL2 through the second chamber C2.

The second inner wall 22 of the second layer part S2 is connected perpendicularly (e.g., extends perpendicularly) to the upper surface of the first layer part S1. The first layer part S1 has a tapered shape (or structure) that gradually expands (or opens) from the inside of the slot SL toward the first discharge port OL1. The second layer part S2 has a straight-line structure uniformly going from the inside of the slot SL to the first discharge port OL1.

Therefore, the first width W1 gradually narrows and the second width W2 is formed uniformly from the inside of the slot SL to the first discharge port OL1. For example, the amount of the active material slurry supplied to the first layer part S1 is less than the amount of the active material slurry supplied to the second layer part S2, and the amount of the active material slurry becomes smaller as it goes to the first discharge port OL1.

In the first layer part S1, the small and decreasing amount of the active material slurry may mitigate or prevent a phenomenon of rising, mixing, and/or breaking at the edge of the active material coating portion while enabling formation of an insulating structure on both sides of the width direction of the active material coating portion, even when coating the insulating material slurry.

Additionally, the first width W1 of the first layer part S1 is extended again (e.g., increases again) from minimum width point P1 to the first discharge port OL1. The second width W2 of the second layer part S2 extends from the minimum width point P1 to the first discharge port OL1.

Due the expansion structure of the second width W2 spreading the active material slurry finally discharged from the first discharge port OL1 in the width direction, the insulating material slurry is coated on the edge of the active material coating portion to form the insulating structure on both sides of the width direction of the active material coating portion, thereby mitigating or preventing the phenomenon of rising, mixing, and/or breaking at the edge of the active material coating portion as a whole.

The insulating material slurry passage 31 has the uniform straight-line structure as it goes from the second chamber C2 to the second discharge port OL2, and then gradually narrows toward the first discharge port OL1 by corresponding to the minimum width point P1 and has the minimum width at the second discharge port OL2.

The minimum width of the second discharge port OL2 is formed such that the insulating material slurry is finally discharged in a small amount and coated on the edge of the active material coating portion, thereby mitigating or preventing the phenomenon of rising, mixing, and/or breaking at the edge of the active material coating portion as a whole while forming the insulating structure on both sides of the width direction of the active material coating portion.

Hereinafter, various other embodiments of the present disclosure are described.

The descriptions of the above embodiment that are the same or substantially the same as that of the following embodiments may be omitted or simplified, and descriptions of different configurations are primarily provided.

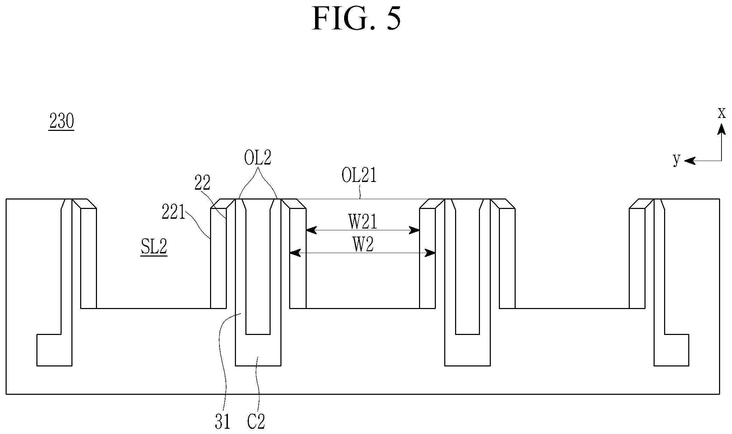

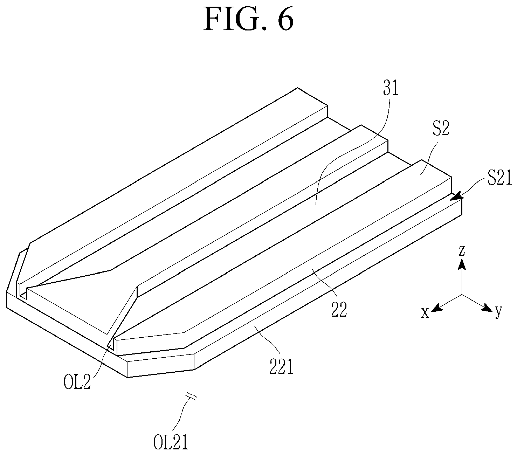

FIG. 5 is a top plan view of a spacer to be applied to a slot die coater according to another embodiment of the present disclosure. FIG. 6 is a partial perspective view of an insulating material slurry passage and first and second discharge ports in the spacer shown in FIG. 5. Referring to FIG. 5 and FIG. 6, a spacer 230 to be applied to a slot die coater, according to another embodiment, includes a first layer part S21 on the bottom die 10 side thereof and has a first width W21 defined between first inner walls 221 on both sides of a first discharge port OL21. The second layer part S2 is provided on the top die 20 side of the spacer 230 and defines a second width W2 between the second inner walls 22 on both sides of the first discharge port OL21. The second width W2 may have a different size than the first width W21.

The second width W2 defined by the second inner walls 22 is larger than the first width W21, which is defined by the first inner walls 221. In addition, because the first width W21 is formed uniformly, the amount of the active material slurry discharged to the first layer part S21 is less than the amount of the active material slurry discharged to the second layer part S2. Therefore, even when coating the insulating material slurry, the phenomenon of rising, mixing, and/or breaking at the edge of the active material coating portion may be mitigated or prevented. This embodiment may, however, exhibit lower performance, within an acceptable range, in mitigating or preventing edge breakage compared to the embodiment described above with reference to FIGS. 1-4.

The first discharge port OL21 is defined between the lower surface of the spacer 230 and the upper surface of the bottom die 10 and is connected to the first supply port IL1 through the first chamber C1. The second discharge port OL2 is defined between the upper surface of the spacer 230 and the lower surface of the top die 20 and is connected to the second chamber C2 through the insulating material slurry passage 31 and to the second supply port IL2 through the second chamber C2.

The first layer part S21 has a uniform straight-line structure from the inside of the slot SL2 to the first discharge port OL21. Additionally, the second layer part S2 has a uniform straight-line structure from the inside of slot SL2 to the first discharge port OL21.

Therefore, the first width W21 is formed uniformly from the inside of the slot SL2 to the first discharge port OL21, and the second width W2 is formed uniformly. For example, the amount of the active material slurry supplied to the first layer part S21 is less than the amount of the active material slurry supplied to the second layer part S2, and the amount of the active material slurry is the same as to the first discharge port OL21.

Even in the case of coating the insulating material slurry with the small amount of the active material slurry in the first layer part S21 while forming the insulating structure on both sides of the width direction of the active material coating portion, the phenomenon of rising, mixing, and/or breaking at the edge of the active material coating portion may be mitigated or prevented. This embodiment may, however, exhibit lower performance, within an acceptable range, in mitigating or preventing edge breakage compared to the embodiment described above with reference to FIGS. 1-4.

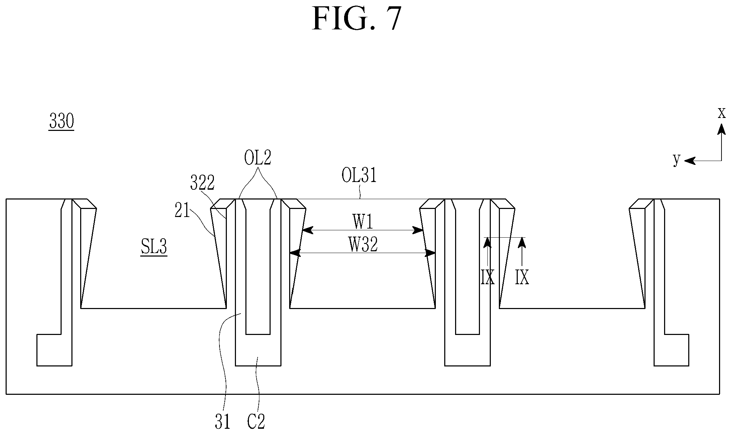

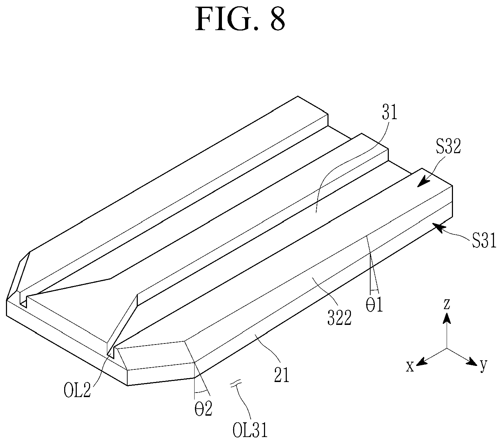

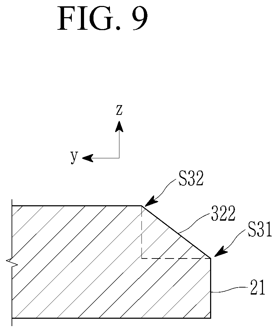

FIG. 7 is a top plan view of a spacer to be applied to a slot die coater according to another embodiment of the present disclosure. FIG. 8 is a partial perspective view of an insulating material slurry passage and first and second discharge ports in the spacer shown in FIG. 7. FIG. 9 is a cross-sectional view taken along the line IX-IX in FIG. 7.

Referring to FIG. 7 to FIG. 9, in a spacer 330 to be applied to a slot die coater, according to an embodiment, a first layer part S31 is provided on the bottom die 10 side thereof and the first width W1 is defined between the first inner walls 21 on both sides of the first discharge port OL1. The second layer part S32 is provided on the top die 20 side of the spacer 330 and defines the second width W32 between the second inner walls 322 on both sides of the first discharge port OL31. The second width W32 may have a different size than the first width W1.

The second width W32 defined by the second inner walls 322 is larger than the first width W1 defined by the first inner walls 21. Because the first width W1 narrows, the amount of the active material slurry discharged to the first layer part S31 is less than the amount of active material slurry discharged to the second layer part S32 and is reduced. Therefore, even when coating the insulating material slurry with the spacer 330, the phenomenon of rising, mixing, and/or breaking at the edge of the active material coating portion may be mitigated or prevented.

The first discharge port OL31 is defined between the lower surface of the spacer 330 and the upper surface of the bottom die 10 and is connected to the first supply port IL1 through the first chamber C1. The second discharge port OL2 is defined between the upper surface of the spacer 330 and the lower surface of the top die 20 and is connected to the second chamber C2 through the insulating material slurry passage 31 and to the second supply port IL2 through the second chamber C2.

Additionally, the second inner wall 322 of the second layer part S32 is connected to the upper end of the first inner wall 21 of the first layer part S31 by an inclined plane. The first layer part S31 has a tapered structure that gradually expands from the inside of slot SL3 toward the first discharge port OL1. Additionally, the inclined plane forming the second inner wall 322 of the second layer part S32 has an inclination angle (θ1-θ2) relative to the thickness direction of the spacer 330. The inclination angle (θ1-θ2) gradually increases from the inside of slot SL3 toward the first discharge port OL31.

The second inner wall 322 connects (e.g., extends between) the upper end and the lower end of the first inner wall 21 with the inclined plane. For example, the second layer part S32 forming the inclined plane structure forms a tapered structure (when viewed from the top) that expands toward the first discharge port OL31 from the inside of the slot SL3 by the second inner wall 322 of the inclination angle (θ1-θ2) and forms a tapered structure (when viewed from the side) that expands further toward the top.

Therefore, from the inside of the slot SL3 to the first discharge port OL1, the first width W1 gradually narrows, and the second width W32 is formed uniformly at the top but gradually narrows from the top to the bottom. Therefore, the amount of the active material slurry supplied to the first layer part S31 is less than the amount of the active material slurry supplied to the second layer part S32, and the amount of the active material slurry becomes smaller as it goes to the first discharge port OL1.

In the first layer part S31, the small and decreasing amount of the active material slurry enables the formation of the insulating structure on both sides of the width direction of the active material coating portion, even when coating the insulating material slurry, thereby mitigating or preventing the phenomenon of rising, mixing, and/or breaking at the edge of the active material coating portion.

Additionally, the amount of the active material slurry supplied to the second layer part S32 of this embodiment is further reduced compared to the amount of the active material slurry supplied to the second layer part S2 of the embodiment described above with reference to FIGS. 1-4 due to the inclined plane of the second inner walls 322. Therefore, this embodiment may exhibit lower performance, within an acceptable range, in mitigating or preventing the edge rising compared to the embodiment described above with reference to FIGS. 1-4.

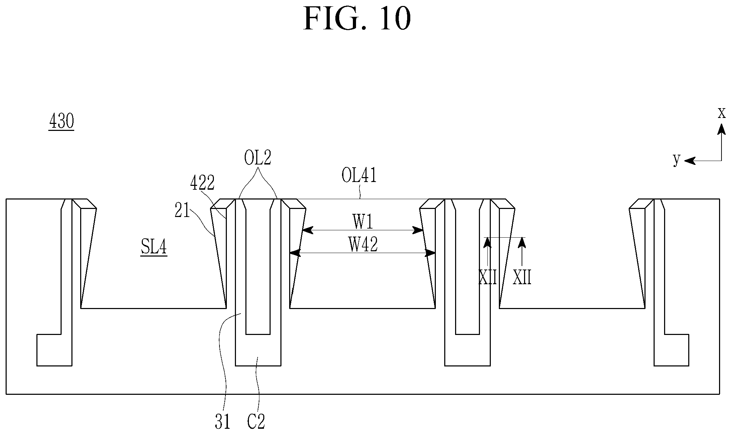

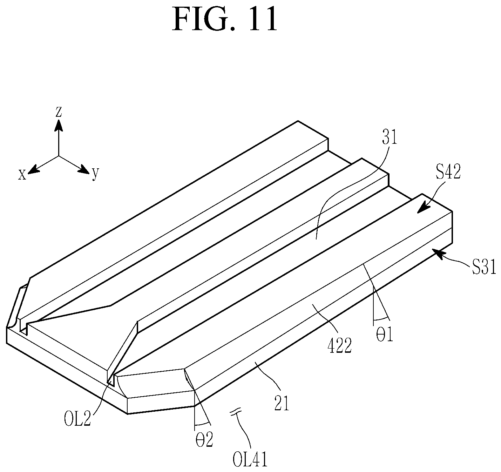

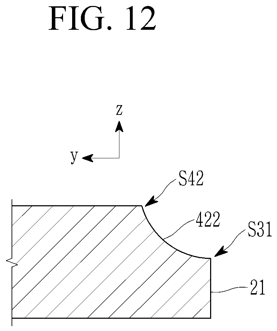

FIG. 10 is a top plan view of a spacer to be applied to a slot die coater according to another embodiment of the present disclosure. FIG. 11 is a partial perspective view of an insulating material slurry passage and first and second discharge ports in the spacer shown in FIG. 10. FIG. 12 is a cross-sectional view taken along the line XII-XII in FIG. 10.

Referring to FIG. 10 to FIG. 12, in a spacer 430 to be applied to a slot die coater, according to an embodiment, a second layer part S42 is provided on a top die 20 side thereof and defines the second width W42 between the second inner walls 422 on both sides of the first discharge port OL41. The second width W42 may have a different size than the first width W1.

The second width W42 defined by the second inner walls 422 is larger than the first width W1 defined by the first inner walls 21. As the first width W1 becomes narrower, the amount of the active material slurry discharged to the first layer part S41 is smaller and reduced compared to the amount of the active material slurry discharged to the second layer part S42. Therefore, even when coating the insulating material slurry with the spacer 430, the phenomenon of rising, mixing, and/or breaking at the edge of the active material coating portion may be mitigated or prevented.

The first discharge port OL41 is defined between the lower surface of the spacer 430 and the upper surface of the bottom die 10 and is connected to the first supply port IL1 through the first chamber C1. The second discharge port OL2 is defined between the upper surface of the spacer 430 and the lower surface of the top die 20 and is connected to the second chamber C2 through the insulating material slurry passage 31 and to the second supply port IL2 through the second chamber C2.

Additionally, the second inner wall 422 of the second layer part S42 is connected to the upper end of the first inner wall 21 of the first layer part S31 with an upward concave surface. The first layer part S31 has a tapered structure that gradually expands from the inside of the slot SL4 toward the first discharge port OL41. Additionally, the upward concave surface forming the second inner wall 422 of the second layer part S42 has an inclination angle (θ1-θ2) relative to the thickness direction of the spacer 430. The inclination angle (θ1-θ2) gradually increases from the inside of the slot SL4 toward the first discharge port OL41.

The second inner wall 422 connects the top and bottom of the first inner wall 21 with the upward concave surface. For example, the second layer part S42 forming the upward concave groove structure forms a tapered structure (when viewed from the top) that expands toward the first discharge port OL41 from the inside of the slot SL4 by the second inner wall 422 of the inclination angle (θ1-θ2) and expands further toward the top (when viewed from the side).

Therefore, from the inside of the slot SL4 to the first discharge port OL1, the first width W1 gradually narrows, and the second width W42 is formed uniformly at the top but gradually narrows from the top to the bottom with an upward concave groove structure. Thus, the amount of the active material slurry supplied to the first layer part S31 is less than the amount of the active material slurry supplied to the second layer part S42, and the amount of the active material slurry becomes even less as it goes to the first discharge port OL1.

In the first layer part S31, the small and decreasing amount of the active material slurry enables the formation of the insulating structure on both sides of the width direction of the active material coating portion, even when coating the insulating material slurry, thereby mitigating or preventing the phenomenon of rising, mixing, and/or breaking at the edge of the active material coating portion.

Additionally, the amount of the active material slurry supplied to the second layer part S42 is further reduced compared to the amount of the active material slurry supplied to the second layer part S2 of the embodiment described above with reference to FIGS. 1-4 due to the upward concave surface of the second inner wall 422. Thus, this embodiment may exhibit lower performance, within an acceptable range, in mitigating or preventing the edge rising compared to the embodiment described above with reference to FIGS. 1-4.

Additionally, the amount of the active material slurry supplied to the second layer part S42 of this embodiment is reduced less than the amount of the active material slurry supplied to the inclined plane of the second layer part S32 of the embodiment described above with reference to FIGS. 7-9 due to the upward concave surface of the second inner wall 422. Thus, this embodiment may exhibit lower performance, within an acceptable range, in mitigating or preventing rising and breakage at the edge compared to the embodiment described above with reference to FIGS. 7-9.

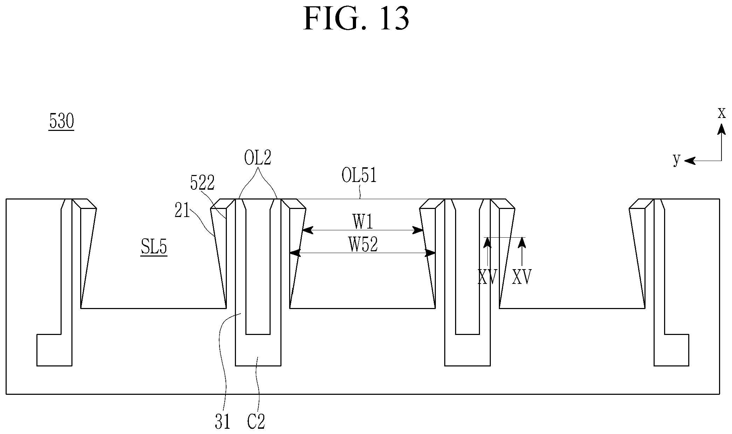

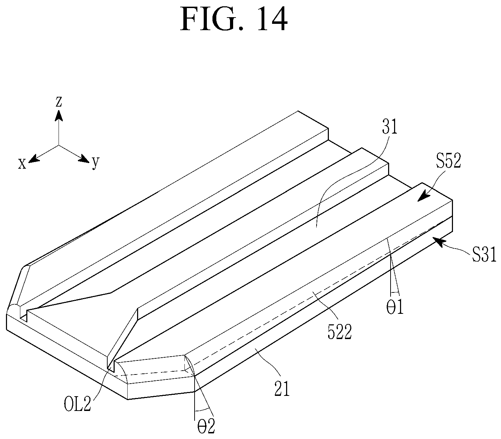

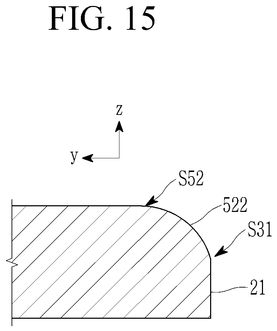

FIG. 13 is a top plan view of a spacer to be applied to a slot die coater according to another embodiment of the present disclosure. FIG. 14 is a partial perspective view of an insulating material slurry passage and first and second discharge ports in the spacer shown in FIG. 13. FIG. 15 is a cross-sectional view taken along the line XV-XV in FIG. 13. In a spacer 530 to be applied to a slot die coater, according to an embodiment, a second layer part S52 is provided on the top die 20 side thereof and defines the second width W52 between second inner walls 522 on both sides of a first discharge port OL51. The second width W52 may have a different size than the first width W1.

The second inner wall 522 of the second layer part S52 is connected to the upper end of the first inner wall 21 of the first layer part S31 as an upward convex surface. The first layer part S31 has a tapered structure that gradually expands from the inside of a slot SL5 toward the first discharge port OL51. Additionally, the upward convex surface forming the second inner wall 522 of the second layer part S52 has an inclination angle (θ1-θ2) relative to the thickness direction of the spacer 530. The inclination angle (θ1-θ2) gradually increases from the inside of slot SL5 toward the first discharge port OL51.

The second inner wall 522 connects the upper and lower ends of the first inner wall 21 with the upward convex surface. For example, the second layer part S52 forming the upward convex protrusion structure forms a tapered structure (when viewed from the top) that expands toward the first discharge port OL51 from the inside of the slot SL5 by the second inner wall 522 of the inclination angle (θ1-θ2) and expands further toward the upper end (when viewed from the side).

Therefore, as it goes from the inside of the slot SL5 to the first discharge port OL1, the first width W1 gradually narrows, and the second width W52 is uniformly formed at the upper end, but gradually narrows from the upper end to the lower end with the upward convex protrusion structure. That is, the amount of the active material slurry supplied to the first layer part S31 is less than the amount of the active material slurry supplied to the second layer part S52, and the amount of the active material slurry becomes even less as it goes to the first discharge port OL1.

Even when the small amount or decreasing amount of active material slurry is coated with the insulating material slurry in the first layer part S31, the phenomenon of rising, mixing, and/or breaking at the edge of the active material coating portion may be mitigated or prevented while forming the insulating structure on both sides of the width direction of the active material coating portion.

Additionally, the amount of the active material slurry supplied to the second layer part S52 is further reduced compared to the amount of the active material slurry supplied to the second layer part S2 of the embodiment described above with reference to FIGS. 1-4 due to the upward convex surface of the second inner wall 522. Thus, this embodiment may exhibit lower performance, within an acceptable range, in mitigating or preventing the rising at the edge compared to the embodiment described above with reference to FIGS. 1-4.

Additionally, the amount of the active material slurry supplied to the second layer part S52 is further reduced by the upward convex surface of the second inner wall 522 compared to the amount of the active material slurry supplied to the upward concave surface of the second layer part S42 of the embodiment described above with reference to FIGS. 10-12. Therefore, this embodiment may exhibit better performance, within an acceptable range, in mitigating or preventing the breakage at the edge compared to the embodiment described above with reference to FIGS. 10-12.

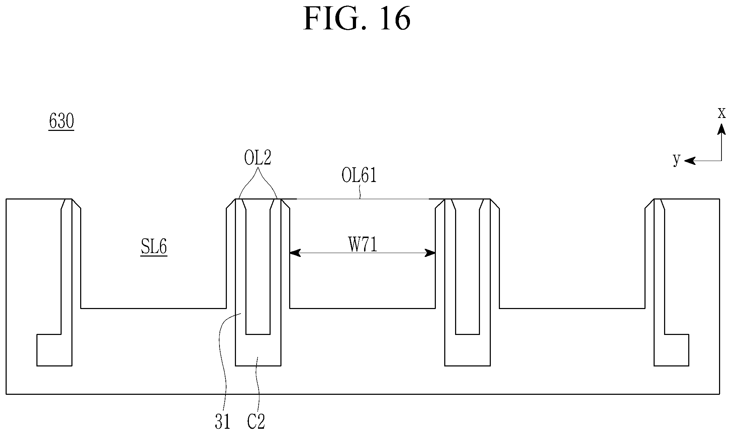

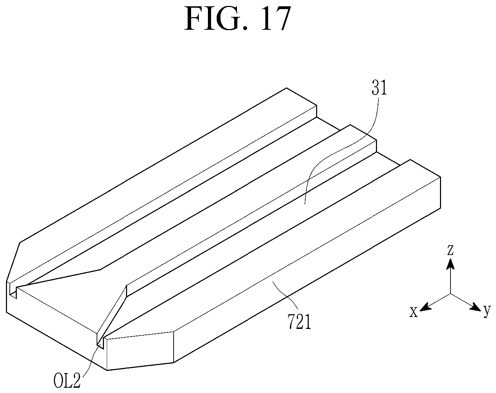

FIG. 16 is a top plan view of a spacer to be applied to a slot die coater according to a comparative example. FIG. 17 is a partial perspective view of an insulating material slurry passage and first and second discharge ports in the comparative spacer shown in FIG. 16. Referring to FIG. 16 and FIG. 17, a comparative spacer 630 to be applied to a slot die coater defines a width W71 between inner walls 721 on both sides of a first discharge port OL61 with a uniform size.

Because the width W71 has the uniform size, the amount of the active material slurry discharged is greater than the amount of the active material slurry discharged from the spacers 30, 230, 330, 430, and 530 according to embodiments of the present disclosure. Therefore, even when coating an insulating material slurry, the phenomenon of rising, mixing, and/or breaking occurs significantly at the edge of the active material coating portion.

The first discharge port OL61 is defined between the lower surface of the spacer 630 and the upper surface of the bottom die and is connected to the first supply port IL61 through the first chamber. The second discharge port OL2 is defined between the upper surface of the spacer 630 and the lower surface of the top die and is connected to the second chamber C2 through the insulating material slurry passage 31 and to the second supply port IL2 through the second chamber C2.

Additionally, the inner wall 721 has a uniform straight-line structure from the inside of the slot SL6 toward the first discharge port OL61. Therefore, from the inside of the slot SL6 to the first discharge port OL61, the width W71 is formed uniformly. Thus, the amount of the active material slurry does not decrease and is uniform while going to the first discharge port OL61.

Different from the reduction in the amount of the active material slurry according to embodiments of the present disclosure, even when coating the insulating material slurry, the uniform amount of the active material slurry in the first discharge port OL61, while forming the insulating structure on both sides of the width direction of the active material coating portion, causes the phenomenon of rising, mixing, and/or breaking at the edge of the active material coating portion.

While this disclosure has been described in connection with what is presently considered to be practical embodiments, it is to be understood that the present disclosure is not limited to the disclosed embodiments but, on the contrary, is intended to cover various modifications and equivalent arrangements included within the scope of the appended claims.

**Description of Some Reference Symbols**

| | | | |
|---|---|---|---|
| 10: | bottom die | 20: | top die |
| 30: | spacer | 31: | insulating material slurry passage |
| 221: | first inner wall | 230: | spacer |
| 322: | second inner wall | 330: | spacer |
| 422: | second inner wall | 430: | spacer |
| 522: | second inner wall | 530: | spacer |
| C1: | first chamber | C2: | second chamber |
| IL1: | first supply port | IL2: | second supply port |
| S1: | first layer part | S2: | second layer part |
| S31: | first layer part | S32: | second layer part |
| S41: | first layer part | S42: | second layer part |
| S52: | second layer part | S52: | second layer part |
| SL: | slot | SL2: | slot |
| SL3: | slot | SL4: | slot |
| SL5: | slot | S21: | first layer part |
| OL1: | first discharge port | OL2: | second discharge port |
| OL21: | first discharge port | OL31: | first discharge port |
| OL41: | first discharge port | OL51: | first discharge port |
| P1: | minimum width point | W1: | first width |
| W2: | second width | W21: | first width |
| W21: | first width | W32: | second width |
| W42: | second width | W52: | second width |
| θ1-θ2: | inclination angle | | |

## Claims

1. A slot die coater comprising:
a top die and a bottom die; and
a spacer between the top die and the bottom die, the spacer having a slot and a first discharge port for discharging an active material slurry and an insulating material slurry passage and a second discharge port for discharging an insulating material slurry on both sides of a width direction of the first discharge port, the spacer comprising:
a first layer part on a bottom die side of the spacer and defining a first width between first inner walls on both sides of the first discharge port, and
a second layer part on a top die side of the spacer and defining a second width between second inner walls on both sides of the first discharge port, the second width having a size different from the first width.

2. The slot die coater of claim 1, wherein the second width is larger than the first width.

3. The slot die coater of claim 1 or claim 2, wherein the bottom die comprises a first chamber and a first supply port,
wherein the first discharge port is connected to the first supply port through the first chamber,
wherein the spacer comprises a second chamber connected to the insulating material slurry passage, and
wherein the second discharge port is connected to a second supply port in the top die through the second chamber and the insulating material slurry passage.

4. The slot die coater of claim 3, wherein the second inner wall of the second layer part is connected perpendicularly to an upper surface of the first layer part.

5. The slot die coater of claim 4, wherein the first layer part has a tapered structure that gradually expands from an inside of the slot toward the first discharge port, and
wherein the second layer part has a uniform straight-line structure from the inside of the slot toward the first discharge port.

6. The slot die coater of claim 5, wherein, from the inside of the slot toward the first discharge port, the first width gradually narrows and the second width is uniform.

7. The slot die coater of claim 5 or claim 6, wherein the first width of the first layer part extends again from a minimum width point of the slot to the first discharge port, and
wherein the second width of the second layer part extends from the minimum width point to the first discharge port, and optionally wherein the insulating material slurry passage has a uniform straight-line structure from the second chamber to the second discharge port and gradually narrows toward the first discharge port by corresponding to the minimum width point and has a minimum width at the second discharge port.

8. The slot die coater of claim 4, wherein the first layer part has a uniform straight-line structure from the inside of the slot toward the first discharge port, and
wherein the second layer part has a uniform straight-line structure from the inside of the slot toward the first discharge port.

9. The slot die coater of claim 8, wherein, from the inside of the slot toward the first discharge port, the first width is uniform and the second width is uniform.

10. The slot die coater of any one of claims 1 to 3, wherein the second inner wall of the second layer part is connected to the top of the first inner wall of the first layer part by an inclined plane.

11. The slot die coater of claim 10, wherein the first layer part has a tapered structure that gradually expands from the inside of the slot toward the first discharge port,
wherein the second layer part has a uniform straight-line structure at a top and a tapered structure that gradually expands at a bottom from the inside of the slot toward the first discharge port, and
wherein the top and the bottom are connected by the inclined plane; and optionally wherein the inclined plane forming the second inner wall of the second layer part has an inclination angle relative to a thickness direction of the spacer, and
wherein the inclination angle gradually increases from the inside of the slot toward the first discharge port.

12. The slot die coater of any one of claims 1 to 3, wherein the second inner wall of the second layer part is connected to an upper end of the first inner wall of the first layer part with an upward concave surface.

13. The slot die coater of claim 12, wherein the first layer part has a tapered structure that gradually expands from the inside of the slot toward the first discharge port,
wherein the second layer part has a uniform straight-line structure at a top and a tapered structure that gradually expands at a bottom from the inside of the slot toward the first discharge port, and
wherein the top and the bottom are connected by the upward concave surface.

14. The slot die coater of any one of claims 1 to 3, wherein the second inner wall of the second layer part is connected to the top of the first inner wall of the first layer part by an upward convex surface.

15. The slot die coater of claim 14, wherein the first layer part has a tapered structure that gradually expands from the inside of the slot toward the first discharge port,
wherein the second layer part has a uniform straight-line structure at a top and a tapered structure that gradually expands at a bottom from the inside of the slot toward the first discharge port, and
wherein the top and the bottom are connected by the upward convex surface.
